# FASCICULE DE BREVET EUROPEEN

(11) **EP 4 008 598 B1**
(45) Date de publication et mention de la délivrance du brevet: **20.08.2025**
(21) Numéro de dépôt: 21212597.5
(22) Date de dépôt: 06.12.2021
(51) Int. Cl.: B61D 25/00, G03B 21/60, G03B 21/62, B60J 3/00, B32B 17/06, G09F 21/04

(54) **VÉHICULE DE TRANSPORT DE PASSAGERS ÉQUIPÉ D'UN SYSTÈME DE VIDÉOPROJECTION**
PASSAGIERTRANSPORTFAHRZEUG, DAS MIT EINEM VIDEOPROJEKTIONSSYSTEM AUSGESTATTET IST
PASSENGER TRANSPORT VEHICLE PROVIDED WITH A VIDEOPROJECTION SYSTEM

(30) Priorité: 07.12.2020 FR 2012778
(43) Date de publication de la demande: 08.06.2022
(73) Titulaire: ALSTOM Holdings, 93400 Saint-Ouen-sur-Seine (FR)
(72) Inventeur: AYME, Nicolas, 17220 SAINTE SOULLE (FR)
(74) Mandataire: Plasseraud IP

(56) Documents cités:
- EP-A1- 3 745 169
- WO-A1-2008/095909
- WO-A1-2013/174632
- WO-A2-2011/090312
- DE-U1- 29 812 007
- DE-U1- 29 812 007

## Description

La présente invention concerne un véhicule de transport de passagers.

L'invention se situe dans le domaine de l'amélioration des véhicules de transport de passagers, notamment des véhicules ferroviaires, par ajout de nouvelles fonctionnalités.

Dans les véhicules de transport de passagers, il existe des emplacements prévus pour l'affichage d'informations, qu'il s'agisse d'informations relatives par exemple au réseau de transport, comme un plan de ligne, ou des informations publicitaires.

Par exemple, il est possible d'utiliser des panneaux adhésifs imprimés pour afficher de telles informations. Un tel procédé ne permet pas de modification facile et dynamique des informations affichés, un changement du panneau adhésif étant nécessaire pour modifier l'information affichée.

Plus récemment on a proposé des systèmes à écran d'affichage, par exemple écran d'affichage LCD, dans lesquels au moins un écran est positionné dans le compartiment de transport de passagers. Néanmoins, un tel système ajoute nécessairement un encombrement supplémentaire dans un compartiment de transport de passagers, ce qui n'est pas souhaitable d'une manière générale. De plus, la maintenance ou l'évolution de tels systèmes vers des versions plus performantes est complexe et coûteuse. De plus, si en plus de la fonction informative, une fonction de divertissement des passagers est également souhaitée, par exemple la projection de vidéos, la surface des écrans LCD doit être suffisante, et leur nombre également doit être suffisant. Cela est à la fois coûteux et encombrant.

Des systèmes de vidéoprojection sont présentés dans les documents WO 2013/174632 A1 montrant le préambule de la revendication 1, DE 298 12 007 U1, WO 2008/095909 A1 et WO 2011/090312 A2.

L'invention a pour objet de remédier aux inconvénients de l'état de la technique.

A cet effet, l'invention propose un véhicule de transport de passagers avec les caractéristiques de la revendication 1.

Le véhicule de transport de passagers selon l'invention peut également présenter une ou plusieurs des caractéristiques ci-dessous, prises indépendamment ou selon toutes les combinaisons techniquement envisageables.

La portion recourbée comporte une ouverture transparente, le vidéoprojecteur étant fixé en regard de ladite ouverture transparente de manière à projeter un faisceau de projection au travers de ladite ouverture transparente vers la surface de projection formée par le film micro-perforé.

L'ouverture transparente est une ouverture traversant ladite portion recourbée du plafond intérieur, recouverte d'un matériau transparent.

Le véhicule comporte en outre un dispositif de ventilation de l'espace ménagé entre le toit et le plafond intérieur.

Le vidéoprojecteur est un vidéoprojecteur interactif, adapté à détecter et interpréter une commande effectuée par un utilisateur sur une zone de la surface de projection.

Le compartiment comporte des parois latérales opposées, chacune desdites parois latérales comportant une pluralité de vitres, chaque vitre étant partiellement recouverte d'un film micro-perforé formant une surface de projection, le véhicule comportant au moins un vidéoprojecteur par vitre.

Le véhicule est un véhicule ferroviaire.

L'invention trouve une application particulière dans le domaine des véhicules ferroviaires, par exemple trains, métros, tramways.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est une première vue schématique en coupe d'un véhicule de transport de passagers selon un mode de réalisation ;
[Fig 2] la figure 2 est une deuxième vue schématique en coupe d'un véhicule de transport de passagers selon un mode de réalisation.

L'invention sera décrite ci-après dans son application pour un véhicule de transport de passagers qui est un véhicule ferroviaire.

L'invention s'applique néanmoins pour d'autres types de véhicules de transport de passagers, par exemple de type bus, voiture, bateau.

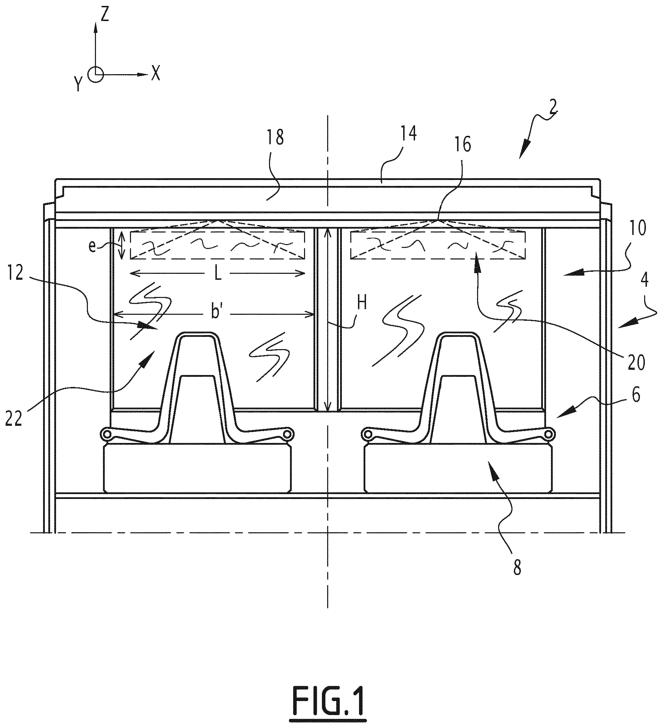

La figure 1 est une première vue schématique d'une portion d'un compartiment 4 de transport de passagers d'un véhicule de transport de passagers 2, selon une coupe longitudinale, selon un plan (X, Z) dans un référentiel tridimensionnel orthogonal (X, Y, Z).

Le compartiment 4 comprend des sièges 6, qui sont dans l'exemple illustré des sièges fixés sur des caissons 8. Les sièges 6 sont par exemple agencés par deux sièges côte-à-côte, regroupés en ilots de groupes de deux sièges positionnés regard.

Bien entendu, il s'agit d'un exemple, tout autre agencement de sièges étant envisageable.

Le compartiment 4 comprend des parois, dont une paroi latérale 10 est illustrée. La paroi latérale comporte des baies dans lesquelles sont insérées des vitres transparentes 12. Par exemple, le compartiment 4 comprend deux parois latérales positionnées en vis-à-vis, s'étendant selon la direction longitudinale X, chaque paroi latérale comportant des baies vitrées, positionnées symétriquement.

Les vitres 12 sont en matériau transparent, par exemple en verre ou en plexiglass.

Dans l'exemple illustré, les sièges 6 sont positionnés de manière à ce que les vitres transparentes 12 soient placées de côté par rapport à l'assise des passagers.

Le compartiment 4 comporte en outre un toit extérieur 14, et un plafond intérieur 16, un espace 18 étant ménagé entre le toit 14 et le plafond intérieur 16.

Au moins certaines des vitres 12 sont au moins partiellement recouvertes, sur leur face intérieure, située à l'intérieur du compartiment 4, d'un film micro-perforé 20, par exemple un film micro-perforé adhésif qui est fixé sur la face intérieure de la vitre par collage.

Par exemple, le film micro-perforé 20 est un film comportant des micro-perforations circulaires de diamètre compris entre 1 et 5mm.

Avantageusement, la lumière traverse les perforations, en particulier la lumière extérieure pénètre dans le compartiment 4.

Le film 20 micro-perforé recouvre partiellement ou totalement la surface intérieure 22 de la vitre 12.

Dans l'exemple illustré, le film 20 micro-perforé recouvre partiellement une surface rectangulaire de dimensions choisies par rapport à la surface 22 de la vitre 12. Par exemple la longueur L de la surface rectangulaire est sensiblement égale à la largeur b' de la surface de la vitre 22, et la largeur l de la surface rectangulaire est égale à environ 20% de la hauteur H de la surface 22 de la vitre 12.

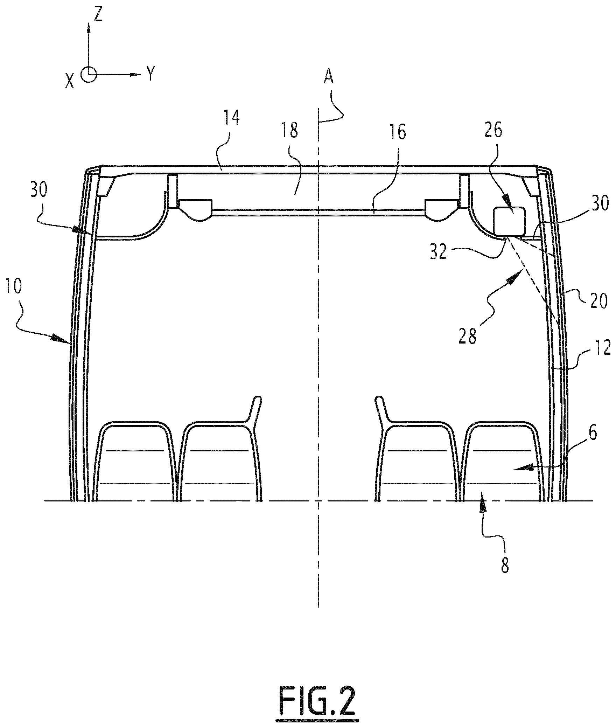

Le film 20 micro-perforé forme une surface de projection, visible de l'intérieur du compartiment 4, sur laquelle sont projetées des images, qui sont des images fixes ou des vidéos, issues d'un vidéoprojecteur 26 visible sur la figure 2.

La figure 2 est une vue schématique en coupe d'un compartiment 4 d'un véhicule de transport de passagers 2, selon un plan de coupe transversal ou plan (Y, Z) dans le référentiel orthogonal (X, Y, Z), qui est orthogonal au plan de coupe (X, Z) de la figure 1.

Le vidéoprojecteur 26 est positionné de manière à éclairer par un faisceau de projection 28 la surface de projection formée par le film 20.

De préférence, le vidéoprojecteur est positionné sur une portion recourbée 30 du plafond intérieur 16, également appelée voussoir 30.

Dans le mode de réalisation illustré, le plafond intérieur 16 comporte deux portions recourbées, symétriques par rapport à un axe central longitudinal, chaque portion recourbée s'étendant vers une paroi latérale 10 correspondante.

Un ouverture 32 est pratiquée dans le voussoir 30, afin de laisser passer le faisceau de projection 28. L'ouverture 32 est un trou de forme adaptée par rapport au vidéoprojecteur. Dans un mode de réalisation, l'ouverture 32 est recouverte d'un matériau transparent, par exemple du verre ou du plexiglass.

Le film micro-perforé et le vidéoprojecteur forment un système de vidéoprojection.

De préférence, le vidéoprojecteur 26 est un vidéoprojecteur de type interactif, adapté à détecter et interpréter une commande effectuée par un utilisateur sur une zone de la surface de projection. Par exemple, la commande est effectuée par un pointage, par exemple au moyen d'un doigt, vers une zone de la surface de projection dans laquelle est affiché un objet graphique sélectionnable, par exemple un menu de commande ou simplement une icône représentative d'un objet ou d'une fonctionnalité sélectionnable.

Ainsi, avantageusement, une fonctionnalité similaire à celle obtenue par un écran tactile peut être obtenue, sans toutefois nécessiter l'installation d'un écran tactile.

Avantageusement, un utilisateur, par exemple un passager, peut interagir avec les contenus affichés. Cela permet par exemple de proposer un plan de ligne interactif pour un réseau de transport en commun, ainsi que l'affichage dynamique, sur commande, d'informations relatives à l'état du trafic, par exemple l'heure d'arrivée prévue dans une station sélectionnée.

Dans un mode de réalisation, le compartiment 4 comporte en outre un dispositif de ventilation de l'espace 18 ménagé entre le toit et le plafond intérieur, qui est par exemple un ventilateur ou un système de climatisation générant un flux d'air circulant dans l'espace 18.

Dans un mode de réalisation, un vidéoprojecteur du type décrit ci-dessus est prévu pour chaque vitre d'un compartiment de transport de voyageurs.

En variante, un nombre de vidéoprojecteurs supérieur au nombre de vitres est prévu, par exemple lorsque chaque paroi latérale est équipée d'une grande baie vitrée. Par exemple, le nombre de vidéoprojecteurs est choisi en fonction du nombre d'ilots formés par des groupes de sièges.

Avantageusement, le positionnement du vidéoprojecteur dans l'espace 18, sur un voussoir 30, permet de projeter des images/vidéos sans ajouter d'encombrement dans le compartiment de transport de voyageurs.

De plus, avantageusement, le faisceau de projection issu du vidéoprojecteur n'est pas traversé par les passagers qui circulent dans le compartiment, ce qui permet d'assurer une projection de contenus en toutes circonstances.

Avantageusement, dans un véhicule de transport de passagers tel que décrit ci-dessus, le système de vidéoprojection réalisant la fonctionnalité d'affichage d'images et/ou vidéos, permettant à la fois l'affichage informatif ou l'affichage de divertissement, est réalisé sans ajouter d'encombrement supplémentaire dans le compartiment de transport de voyageurs.

Avantageusement, la maintenance est facilitée, ainsi que l'installation de versions mises à jours du vidéoprojecteur, par rapport à un système comportant des câblages et des écrans LCD.

## Revendications

1. Véhicule de transport de passagers comprenant au moins un compartiment (4) de transport équipé de vitres transparentes, le véhicule (2) comprenant en outre au moins un vidéoprojecteur (26) positionné à l'intérieur du compartiment,
dans lequel au moins une vitre (12) est au moins partiellement recouverte d'un film (20), ledit film formant une surface de projection visible de l'intérieur du compartiment, ledit vidéoprojecteur (26) étant adapté pour projeter des images sur ladite surface de projection, **caractérisé en ce que** :
- - le film (20) est micro-perforé de manière à laisser pénétrer la lumière externe dans le compartiment (4),
- le compartiment (4) comporte un toit (14) et un plafond intérieur (16), un espace (18) étant ménagé entre le toit (14) et le plafond intérieur (16), le plafond intérieur (16) comportant une portion recourbée (30) s'étendant vers une paroi (10) du compartiment (4), ladite paroi (10) comportant au moins une vitre (12) au moins partiellement recouverte de film (20) micro-perforé, le vidéoprojecteur (26) étant fixé dans ledit espace, le vidéoprojecteur (26) étant fixé à ladite portion recourbée (30).

2. Véhicule selon la revendication 1, dans lequel ladite portion recourbée (30) comporte une ouverture (32) transparente, le vidéoprojecteur (26) étant fixé en regard de ladite ouverture (32) transparente de manière à projeter un faisceau (28) de projection au travers de ladite ouverture transparente vers la surface de projection formée par le film (20) micro-perforé.

3. Véhicule selon la revendication 2, dans lequel ladite ouverture (32) transparente est une ouverture traversant ladite portion recourbée du plafond intérieur, recouverte d'un matériau transparent.

4. Véhicule selon l'une des revendications 1 à 3, comportant en outre un dispositif de ventilation de l'espace ménagé entre le toit (14) et le plafond intérieur (16).

5. Véhicule selon l'une quelconque des revendications 1 à 4, dans lequel ledit vidéoprojecteur (26) est un vidéoprojecteur interactif, adapté à détecter et interpréter une commande effectuée par un utilisateur sur une zone de la surface de projection.

6. Véhicule selon l'une quelconque des revendications 1 à 5, dans lequel ledit compartiment (4) comporte des parois latérales opposées, chacune desdites parois latérales comportant une pluralité de vitres (12), chaque vitre étant partiellement recouverte d'un film (20) micro-perforé formant une surface de projection, le véhicule comportant au moins un vidéoprojecteur (26) par vitre (12).

7. Véhicule selon l'une quelconque des revendications 1 à 6, ledit véhicule étant un véhicule ferroviaire.

## Patentansprüche

1. Personentransportfahrzeug mit wenigstens einem mit transparenten Scheiben ausgestatteten Transportabteil (4), wobei das Fahrzeug (2) ferner wenigstens einen im Inneren des Transportabteils angeordneten Videoprojektor (26) umfasst, wobei wenigstens eine Scheibe (12) wenigstens teilweise mit einer Folie (20) bedeckt ist, wobei die Folie eine vom Inneren des Abteils sichtbare Projektionsfläche bildet, wobei der Videoprojektor (26) dazu ausgelegt ist, Bilder auf die Projektionsfläche zu projizieren, **dadurch gekennzeichnet, dass**:
- die Folie (20) mikroperforiert ist, um das Eindringen von Außenlicht in das Abteil (4) zu ermöglichen,
- das Abteil (4) ein Dach (14) und eine Innendecke (16) aufweist, wobei zwischen dem Dach (14) und der Innendecke (16) ein Raum (18) ausgebildet ist, wobei die Innendecke (16) einen gebogenen Abschnitt (30) aufweist, der sich zu einer Wand (10) des Abteils (4) erstreckt, wobei die Wand (10) wenigstens eine Scheibe (12) aufweist, die wenigstens teilweise mit einer mikroperforierten Folie (20) bedeckt ist, wobei der Videoprojektor (26) in dem Raum befestigt ist, wobei der Videoprojektor (26) an dem gebogenen Abschnitt (30) befestigt ist.

2. Fahrzeug nach Anspruch 1, wobei der gebogene Abschnitt (30) eine transparente Öffnung (32) aufweist, wobei der Videoprojektor (26) gegenüber der transparenten Öffnung (32) so befestigt ist, dass er einen Projektionsstrahl (28) durch die transparente Öffnung auf die durch die mikroperforierte Folie (20) gebildete Projektionsfläche projiziert.

3. Fahrzeug nach Anspruch 2, wobei die transparente Öffnung (32) eine Öffnung ist, die den gebogenen Abschnitt der Innendecke durchdringt und mit einem transparenten Material bedeckt ist.

4. Fahrzeug nach einem der Ansprüche 1 bis 3, das ferner eine Vorrichtung zum Belüften des Raums zwischen dem Dach (14) und der Innendecke (16) umfasst.

5. Fahrzeug nach einem der Ansprüche 1 bis 4, wobei der Videoprojektor (26) ein interaktiver Videoprojektor ist, der dazu ausgelegt ist, einen von einem Benutzer auf einem Bereich der Projektionsfläche ausgeführten Befehl zu erfassen und zu interpretieren.

6. Fahrzeug nach einem der Ansprüche 1 bis 5, wobei das Abteil (4) gegenüberliegende Seitenwände aufweist, wobei jede der Seitenwände mehrere Scheiben (12) aufweist, wobei jede Scheibe teilweise mit einer mikroperforierten Folie (20) bedeckt ist, die eine Projektionsfläche bildet, und das Fahrzeug wenigstens einen Videoprojektor (26) pro Scheibe (12) aufweist.

7. Fahrzeug nach einem der Ansprüche 1 bis 6, wobei das Fahrzeug ein Schienenfahrzeug ist.

## Claims

1. Passenger transport vehicle comprising at least one transport compartment (4) equipped with transparent window panes, the vehicle (2) further comprising at least one video projector (26) positioned inside the compartment,
wherein at least one window pane (12) is at least partially covered with a film (20), said film forming a projection surface visible from the inside of the compartment, said video projector (26) being adapted to project images onto said projection surface,
**characterised in that**:
-- the film (20) is micro-perforated so as to allow external light to enter the compartment (4),
- the compartment (4) includes a roof (14) and an inner ceiling (16), a space (18) being provided between the roof (14) and the inner ceiling (16), the inner ceiling (16) including a curved portion (30) extending towards a wall (10) of the compartment (4), said wall (10) including at least one window pane (12) at least partially covered with microperforated film (20), the video projector (26) being secured in said space, the video projector (26) being secured to said curved portion (30).

2. Vehicle according to claim 1, wherein said curved portion (30) includes a transparent opening (32), the video projector (26) being secured facing said transparent opening (32) so as to project a projection beam (28) through said transparent opening towards the projection surface formed by the micro-perforated film (20).

3. Vehicle according to claim 2, wherein said transparent opening (32) is an opening passing through said curved portion of the inner ceiling, covered with a transparent material.

4. Vehicle according to one of claims 1 to 3, further including a device for ventilating the space provided between the roof (14) and the interior ceiling (16).

5. Vehicle according to any one of claims 1 to 4, wherein said video projector (26) is an interactive video projector, adapted to detect and interpret a command made by a user on an area of the projection surface.

6. Vehicle according to any one of claims 1 to 5, wherein said compartment (4) includes opposite side walls, each of said side walls including a plurality of window panes (12), each window pane being partially covered with a micro-perforated film (20) forming a projection surface, the vehicle including at least one video projector (26) per window pane (12).

7. Vehicle according to any one of claims 1 to 6, said vehicle being a rail vehicle.
